# FASCICULE DE BREVET EUROPEEN

(11) **EP 3 164 245 B1**
(45) Date de publication et mention de la délivrance du brevet: **01.08.2018**
(21) Numéro de dépôt: 15733850.0
(22) Date de dépôt: 19.06.2015
(51) Int. Cl.: B25B 5/04, B25B 5/06

(54) **DISPOSITIF DE SERRAGE DE PIECES DESTINEES A ETRE ASSEMBLEES**
VORRICHTUNG ZUR KLEMMUNG VON ANEINANDERZUFÜGENDEN TEILEN
DEVICE FOR CLAMPING PARTS INTENDED TO BE JOINED

(30) Priorité: 04.07.2014 FR 1456482
(43) Date de publication de la demande: 10.05.2017
(73) Titulaire: PSA Automobiles SA, 78300 Poissy (FR)
(72) Inventeur: LEFEUVRE, Jean Jacques, F-35700 Rennes (FR); LAUTRAM, Daniel, F-35580 Guignen (FR); MARTINAIS, Bruno, F-35131 CHARTRES DE BRETAGNE (FR); ROULLEAU, Patrick, F-35470 La Noe Blanche (FR); DANIEL, Joseph, F-35690 Acigne (FR)
(74) Mandataire: Fosse, Danièle
(86) Numéro de dépôt international: PCT/FR2015/051629
(87) Numéro de publication internationale: WO 2016/001507

(56) Documents cités:
- EP-A1- 1 524 080
- EP-A2- 2 450 145

## Description

La présente invention concerne un dispositif de serrage de pièces destinées à être assemblées, notamment des pièces de carrosserie de véhicule dans une opération de ferrage.

En fabrication automobile, les pièces qui constituent la carrosserie d'un véhicule sortent de lignes d'emboutissage avant d'être assemblées sur des lignes de ferrage équipées de mobiles de manutention, de robots de soudure, de conformateurs géométriques, etc., de façon à réaliser une armature de caisse complète expédiée ensuite par convoyeurs vers l'atelier de peinture.

Les opérations de ferrage sont essentiellement des opérations d'assemblage par soudage, qui nécessitent un accostage parfait entre les pièces ou sous-ensembles à assembler.

On connaît déjà des systèmes de mise en place de pièces de carrosserie dans des opérations de ferrage, en particulier de soudage.

Ainsi, par exemple, le document FR 2 383 818 décrit un dispositif d'assemblage par soudage de caisses de véhicules destiné aux caisses de véhicules d'au moins deux types différents. Ce dispositif comprend des moyens permettant de mettre en place avec précision le dessous de la caisse sommairement assemblée d'un véhicule automobile, des moyens servant à mettre en place avec précision d'autres éléments de la caisse sommairement assemblée par rapport à sa partie inférieure, et des moyens servant au soudage de ces autres éléments les uns aux autres et à ladite partie inférieure de la caisse, les pièces étant maintenues avec précision, de manière à fixer la forme de la caisse. Les moyens servant à mettre en place avec précision les autres éléments de la caisse sommairement assemblée comprennent des moyens de mise en place interchangeables, dont chacun présente une forme qui lui permet de s'appliquer contre l'un des types de caisses de véhicules à souder. Les moyens servant à souder ces autres éléments sont programmables, de façon à pouvoir effectuer des opérations de soudage aux points différents de caisses de types différents. Les moyens servant à la mise en place du dessous de la caisse sont constitués par une plate-forme transportable, différentes plates-formes étant prévues pour correspondre à des dessous de caisses de types différents, et les moyens servant à mettre en place lesdits autres éléments comprennent des barrières latérales interchangeables situées dans un poste d'assemblage.

Le document EP 0 915 008 B1 décrit un dispositif pour serrer une pièce de forme, notamment un élément de carrosserie dans l'ébauche d'un véhicule automobile. Ce dispositif comporte un cadre qui reçoit la pièce de forme et comporte plusieurs éléments de serrage servant à serrer la pièce de forme. L'élément de serrage comporte une partie de retenue, qui s'applique sur la pièce de forme, et un élément de serrage qui serre la pièce de forme sur la partie de retenue. La partie de retenue est agencée de telle sorte qu'elle s'applique ponctuellement sur la pièce de forme et que l'élément de serrage attaque la pièce de forme selon la normale à la surface au niveau du point d'application de sorte que la pièce de forme est fixée uniquement dans une dimension. L'élément de serrage comporte une pièce de serrage soumise à l'action de la force d'un ressort ou entraînée hydrauliquement.

Le document EP 2 450 145 A2 divulgue une dispositif de serrage selon la préambule de la revendication 1.

Le plus souvent ces dispositifs sont réalisés par rapport à un véhicule donné et spécifiquement dédiés à la forme des différentes parties à assembler de manière à garantir la meilleure qualité d'assemblage possible.

Toutefois, l'évolution industrielle actuelle tend à rationaliser les outils de ferrage et notamment tend à proposer des outils adaptables à une utilisation sur des modèles de véhicules différents et donc adaptables facilement à des formes de pièces différentes tout en garantissant un serrage optimal en vue d'un assemblage optimal également.

A cet effet, on propose un dispositif de serrage de pièces destinées à être assemblées, notamment des pièces de carrosserie de véhicule dans une opération de ferrage, du type constitué d'un bras fixe et d'un bras mobile formant pince de serrage, les deux bras étant montés sur un support d'articulation monté sur un pied de fixation, ledit support d'articulation comprenant deux flasques entre lesquels s'étend l'axe d'articulation de la pince, caractérisé en ce que l'articulation est pourvue de rondelles ressort permettant un rattrapage de jeu et d'usure automatique et les flasques présentent, en outre, une souplesse telle qu'elle leur permet de contribuer au rattrapage de jeu automatique de l'articulation.

De manière avantageuse, la souplesse des flasques du support collabore avec les rondelles ressort de l'articulation pour favoriser et garantir le rattrapage automatique des jeux et usures de ladite articulation ce qui permet au support d'articulation de pouvoir être monté sur un pied de fixation de type standard tandis que l'articulation à rattrapage de jeu et d'usure automatique permet d'utiliser le dispositif de serrage ainsi constitué malgré les jeux survenant d'une pièce à une autre de manière fiable.

Selon une forme de réalisation préférée de l'invention, l'articulation est constituée d'un axe traversant les deux flasques au travers d'orifices ménagés dans lesdites flasques et au travers de l'extrémité du bras mobile, une bague de frottement étant interposée entre ledit axe et le bras mobile ainsi qu'une rondelle de frottement entre le bras mobile et chaque flasque. L'axe d'articulation présente un épaulement à une extrémité venant en appui contre un flasque et, à son extrémité opposée, est agencé pour recevoir un écrou de fixation, une rondelle ressort étant interposée entre l'épaulement et le flasque d'une part et le flasque et l'écrou d'autre part.

Les flasques sont conformés pour présenter un degré de souplesse contribuant au rattrapage de tous les jeux et de l'usure par les rondelles ressort. De préférence, les flasques sont réalisés en acier, tel qu'un acier ayant une protection par brunissage. Selon un mode de réalisation particulièrement avantageux de l'invention, la flexion théorique d'un flasque est de ±0.2 mm ce qui conduit à une flexion avec les deux flasques de ±0.4 mm et donc à une souplesse totale avec les deux flasques de 0.8 mm.

On garantit ainsi un serrage avec une bonne rigidité, une géométrie de grande précision, de montage et de réglage facile.

Le dispositif de serrage selon l'invention permet donc un gain économique puisqu'elle est principalement constituée de composants standards tels que le support d'articulation et le pied de fixation et en outre elle garantit une qualité géométrique par l'annulation de jeux dans l'articulation. Par ailleurs, pour adapter ces pinces en vue de constituer un outillage pour différentes pièces, on prévoit des séries de composants tels que le pied de fixation à plusieurs dimensions permettant ainsi de composer un outillage adapté avec des composants standards interchangeables.

L'invention concerne également un outillage comportant au moins un dispositif de serrage selon l'invention porté par un pied de fixation sur une plaque de support et permettant la tenue d'au moins une pièce de carrosserie en vue de son traitement lors de diverses opérations de ferrage, par exemple.

On décrira maintenant l'invention plus en détails en référence au dessin dans lequel :

Les figures 1a et 1b représentent respectivement une vue en perspective d'un exemple de dispositif de serrage selon l'invention ;

La figure 2 représente une vue en plan d'un support d'articulation selon l'invention ;

Les figures 3a et 3b représentent respectivement une vue agrandie de la fixation du bras fixe sur le dispositif des figures 1a et 1b.

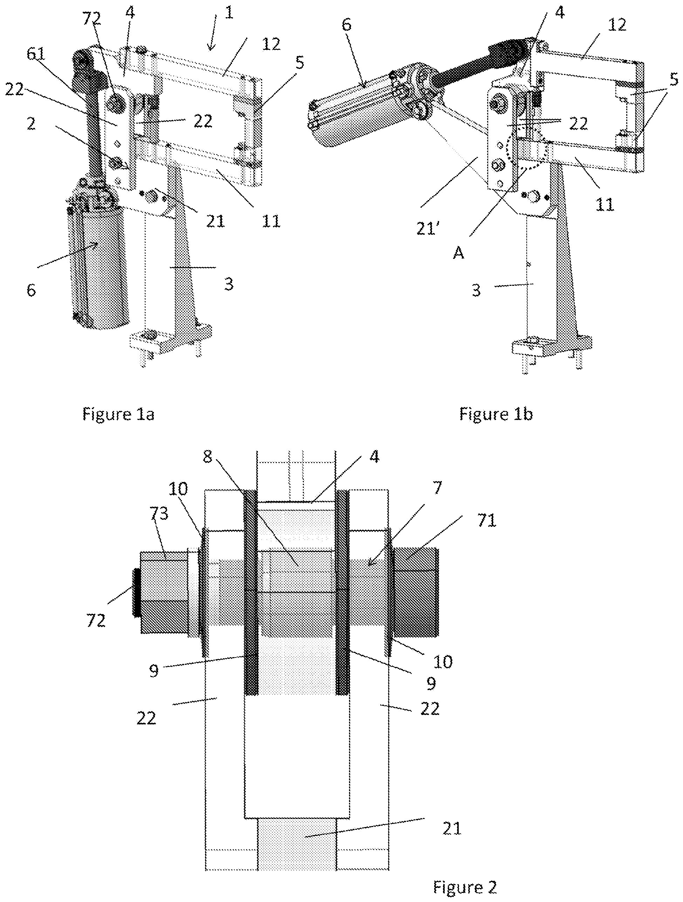

Comme on peut le voir sur les figures 1a et 1b, un dispositif de serrage 1 selon l'invention présente un bras 11 fixe et un bras mobile 12 formant une pince.

Ces deux bras 11, 12 sont montés sur un support d'articulation 2 qui est lui-même monté sur un pied de fixation 3. Ce pied de fixation 3 peut être monté sur une plaque de support avec d'autres pieds portant des dispositifs de serrage du même type et avec une configuration appropriée selon la forme et les dimensions de la pièce à recevoir.

Le support d'articulation 2 est constitué de deux parties, l'une formant un socle 21 est fixée à l'extrémité libre du pied de fixation 3 et est agencée pour recevoir le bras fixe de la pince et l'autre étant constituée de deux flasques 22 s'étendant parallèlement l'une à l'autre depuis le socle 21 et portant le bras mobile 12 articulé de la pince.

De préférence, le bras mobile 12 est monté articulé sur les deux flasques 22 via une pièce intermédiaire 4. Cette pièce intermédiaire 4 présente au moins deux parties l'une 4a étant pourvue d'un orifice au travers duquel peut s'engager l'axe d'articulation et l'autre 4b présentant des moyens pour la fixation du bras mobile 12.

Les deux bras 11 et 12 sont montés respectivement sur le socle 21 et sur les flasques 22 de manière à s'étendre parallèlement l'une à l'autre, leurs extrémités étant en regard l'une de l'autre et pourvues d'éléments de serrage 5, également montés amovibles à l'extrémité des bras 11, 12.

Une pince 1 ainsi formée peut être activée manuellement, un levier à main étant fixé à la pièce intermédiaire 4 de manière à pouvoir entraîner celle-ci en rotation dans le sens de l'ouverture ou de la fermeture de la pince 1. On peut également prévoir un actionnement automatique par un vérin 6 dont l'extrémité de la tige 61 est fixée sur la pièce intermédiaire, le vérin 6 permettant ainsi l'entraînement en rotation du bras mobile 12. On peut ainsi voir à la figure 1a, que la pièce intermédiaire 4 présente une forme sensiblement en T, les extrémités de la barre du T étant pour l'une fixée à la tige 61 du vérin et pour l'autre portant le bras mobile 12 de la pince tandis que le pied du T est monté entraînable en rotation sur l'axe de l'articulation 7. Le vérin 6 est positionné de sorte à s'étendre sensiblement parallèlement au pied de fixation 3.

A la figure 1b, le vérin 6 s'étend sensiblement perpendiculairement à ce même pied 3, la partie 4b de la pièce intermédiaire 4 étant également reliée à la tige 61 du vérin 6. Le socle 21' du support d'articulation 2 de la pince présente une partie en saillie sur laquelle est fixé le cylindre 62 du vérin 6.

Entre les deux flasques 22 s'étend l'axe d'articulation 7 du bras mobile 12 de la pince 1. Cet axe 7 est engagé au travers d'orifices ménagés en regard dans les flasques 22 et au travers d'un orifice ménagé dans la pièce intermédiaire 4 et elle présente de préférence à une extrémité un épaulement 71 venant reposer contre la face extérieure d'un flasque 22 et son autre extrémité 72 en saillie de l'autre flasque 22 est filetée pour recevoir un écrou 73. Une bague de frottement 8 est en outre interposée entre l'axe 7 et la pièce intermédiaire 4 tandis que des rondelles de frottement 9 sont interposées entre ladite pièce intermédiaire 4 et chaque flasque 22.

De manière à permettre un rattrapage des jeux et de l'usure, on met en place entre d'une part l'épaulement de l'axe d'articulation et le flasque 22 contre lequel il se loge ainsi qu'entre l'écrou 72 et le flasque 22 contre lequel il vient en appui au moins une rondelle ressort 10. Par ailleurs, les flasques 22 sont réalisés en acier de sorte que chaque flasque 22 présente une flexion théorique de ± 0.2 mm, ce qui fait une flexion avec les deux flasques de ± 0.4 mm et donc une souplesse totale avec les deux flasques de 0.8 mm, souplesse telle que celle-ci contribue au rattrapage des jeux et de l'usure en coopération avec les rondelles ressort 10.

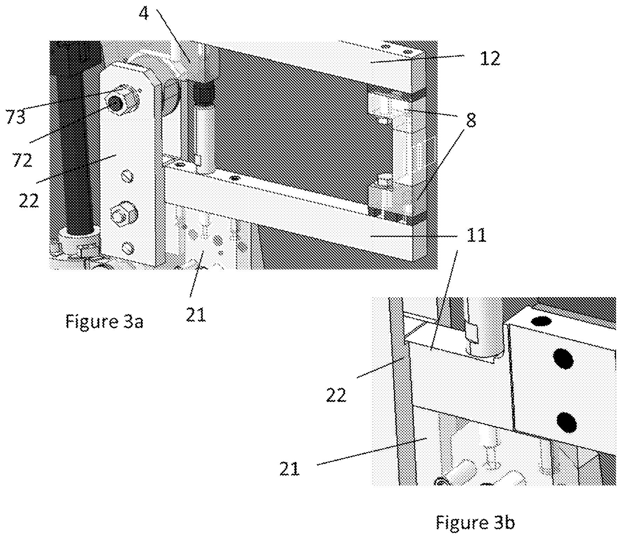

Comme on peut le voir sur la figure 3a, le bras fixe 11 est monté sur le socle 21 du support d'articulation de la pince de la figure 1a à l'aide de moyens de fixation permettant un montage dudit bras 11 simple et sûr mais permettant également son démontage facile. Pour la pince de la figure 1b, et de manière à garantir un bon maintien lors de l'ouverture de la pince, l'extrémité du bras fixe 11 est non seulement fixée sur le socle 21 mais également prise en sandwich entre les flasques 22 comme on peut le voir à la figure 3b qui représente l'agrandissement de la partie A de la figure 1b.

## Revendications

1. Dispositif de serrage (1) de pièces destinées à être assemblées, notamment des pièces de carrosserie de véhicule dans une opération de ferrage, du type constitué d'un bras fixe (11) et d'un bras mobile (12) formant pince de serrage, les deux bras (11, 12) étant montés sur un support d'articulation (2) monté sur un pied de fixation (3), ledit support d'articulation (2) comprenant deux flasques (22) entre lesquels s'étend l'axe d'articulation (7) de la pince, **caractérisé en ce que** l'articulation est pourvue de rondelles ressort (10) permettant un rattrapage de jeu et d'usure automatique et les flasques (22) présentent, en outre, une souplesse telle qu'elle leur permet de contribuer au rattrapage de jeu automatique de l'articulation.

2. Dispositif (1) selon la revendication 1, **caractérisé en ce que** l'articulation est constituée de l'axe (7) traversant les deux flasques (22) et l'extrémité du bras mobile (12), une bague de frottement (8) étant interposée entre ledit axe (7) et le bras mobile (12) ainsi qu'une rondelle de frottement (9) entre le bras mobile (12) et chaque flasque (22).

3. Dispositif selon la revendication 2, **caractérisé en ce que** l'axe d'articulation (7) présente un épaulement (71) à une extrémité venant en appui contre un flasque (22) et à son extrémité opposée (72) est agencé pour recevoir un écrou de fixation (73), une rondelle ressort (10) étant interposée entre l'épaulement (71) et le flasque (22) d'une part et le flasque (22) et l'écrou (73) d'autre part.

4. Dispositif selon l'une des revendications 1 à 3, **caractérisé en ce que** les flasques (22) sont réalisées en acier.

5. Dispositif selon l'une des revendications 1 à 4, **caractérisé en ce que** chaque flasque (22) présente une flexion théorique de ± 0.2 mm, ce qui conduit à une flexion avec les deux flasques (22) de ± 0.4 mm et à une souplesse totale avec les deux flasques (22) de 0.8 mm.

6. Dispositif (1) selon l'une des revendications 1 à 3, **caractérisé en ce que** le support d'articulation (2) est constitué de deux parties, l'une formant un socle (21) fixée à l'extrémité libre du pied de fixation (3) étant agencée pour recevoir le bras fixe (11) de la pince et l'autre étant constituée des deux flasques (22) s'étendant parallèlement l'une à l'autre depuis le socle (21), les deux bras (11, 12) étant montés pour le bras fixe (11) sur le socle (21) et pour le bras mobile (12) sur les flasques (22) de manière à s'étendre parallèlement l'un à l'autre, leurs extrémités étant en regard l'une de l'autre et pourvues d'éléments de serrage (5).

7. Dispositif (1) selon la revendication 6, **caractérisé en ce que** le bras fixe (11) est monté sur le socle (21) du support d'articulation (2), son extrémité étant prise en sandwich entre les flasques (22).

8. Dispositif (1) selon l'une des revendications 1 à 7, **caractérisé en ce que** le bras mobile (12) est monté articulé sur les deux flasques (22) via une pièce intermédiaire (4) présentant au moins deux parties l'une (4a) étant pourvue d'un orifice au travers duquel est engageable l'axe d'articulation (7) et l'autre (4b) présentant des moyens pour la fixation du bras mobile (12).

9. Dispositif (1) selon la revendication 8, caractérisé en qu'un levier est fixé à la pièce intermédiaire (4) de manière à pouvoir entraîner celle-ci en rotation dans le sens de l'ouverture ou de la fermeture du dispositif de serrage (1).

10. Dispositif (1) selon la revendication 8, caractérisé en que l'extrémité d'une tige (61) d'un vérin (6) est fixée à la pièce intermédiaire (4) de manière à pouvoir entraîner celle-ci en rotation dans le sens de l'ouverture ou de la fermeture du dispositif de serrage (1).

## Patentansprüche

1. Vorrichtung (1) zum Klemmen von Teilen, insbesondere von Fahrzeugkarosserieteilen, die dazu bestimmt sind, bei einem Beschlagarbeitsvorgang zusammengefügt zu werden, vom Typ, der aus einem stationären Arm (11) und einem beweglichen Arm (12) besteht, die eine Klemmzange bilden, wobei die zwei Arme (11, 12) auf einen Anlenkungsträger (2) montiert sind, der auf einen Befestigungsfuß (3) montiert ist, wobei der Anlenkungsträger (2) zwei Flansche (22) umfasst, zwischen welchen sich die Anlenkachse (7) der Zange erstreckt, **dadurch gekennzeichnet, dass** die Anlenkung mit Federscheiben (10) versehen ist, die ein automatisches Nachstellen von Spiel und Abnutzung erlauben, und dass die Flansche (22) außerdem eine Geschmeidigkeit derart aufweisen, dass sie es ihnen erlaubt, zum automatischen Spielnachstellen der Anlenkung beizutragen.

2. Vorrichtung (1) nach Anspruch 1, **dadurch gekennzeichnet, dass** die Anlenkung aus der Achse (7) besteht, die die zwei Flansche (22) und das Ende des beweglichen Arms (12) durchquert, aus einem Reibungsring (8), der zwischen der Achse (7) und dem beweglichen Arm (12) eingefügt ist, sowie aus einer Reibungsscheibe (9) zwischen dem beweglichen Arm (12) und jedem Flansch (22).

3. Vorrichtung nach Anspruch 2, **dadurch gekennzeichnet, dass** die Anlenkachse (7) einen Ansatz (71) an einem Ende aufweist, der gegen einen Flansch (22) zum Aufliegen kommt, und dass sie an ihrem gegenüberliegenden Ende (72) eingerichtet ist, um eine Befestigungsschraube (73) aufzunehmen, wobei eine Federscheibe (10) zwischen den Ansatz (71) und den Flansch (22) einerseits und den Flansch (22) und die Mutter (73) andererseits eingefügt ist.

4. Vorrichtung nach einem der Ansprüche 1 bis 3, **dadurch gekennzeichnet, dass** die Flansche (22) aus Stahl hergestellt sind.

5. Vorrichtung nach einem der Ansprüche 1 bis 4, **dadurch gekennzeichnet, dass** jeder Flansch (22) eine theoretische Biegung von ±0,2 mm aufweist, was zu einer Biegung mit den zwei Flanschen (22) von ±0,4 mm und einer Gesamtbiegsamkeit mit den zwei Flanschen (22) von 0,8 mm führt.

6. Vorrichtung (1) nach einem der Ansprüche 1 bis 3, **dadurch gekennzeichnet, dass** der Anlenkungsträger (2) aus zwei Teilen besteht, wobei einer einen Sockel (21) bildet, der an dem freien Ende des Befestigungsfußes (3), der eingerichtet ist, um den stationären Arm (11) der Zange aufzunehmen, befestigt ist, und der andere, der aus den zwei Flanschen (22) besteht, die sich parallel zueinander ausgehend von dem Sockel (21) erstrecken, wobei die zwei Arme (11, 12) für den stationären Arm (11) auf dem Sockel (21) und für den beweglichen Arm (12) auf den Flanschen (22) derart montiert sind, dass sie sich zueinander parallel erstrecken, wobei ihre Enden einander gegenüber liegen und mit Klemmelementen (5) verbunden sind.

7. Vorrichtung (1) nach Anspruch 6, **dadurch gekennzeichnet, dass** der stationäre Arm (11) auf den Sockel (21) des Anlenkungsträgers (2) montiert ist, wobei sein Ende zwischen den Flanschen (22) ins Sandwich genommen ist.

8. Vorrichtung (1) nach einem der Ansprüche 1 bis 7, **dadurch gekennzeichnet, dass** der bewegliche Arm (12) auf den zwei Flanschen (22) über ein Zwischenteil (4) gelenkig montiert ist, das mindestens zwei Teile aufweist, wobei einer (4a) mit einer Öffnung versehen ist, durch welche die Anlenkachse (7) einfügbar ist, und der andere (4b) Mittel zum Befestigen des beweglichen Arms (12) aufweist.

9. Vorrichtung (ein) nach Anspruch 8, **dadurch gekennzeichnet, dass** ein Hebel an dem Zwischenteil (4) derart befestigt ist, dass er dieses in Drehung in die Richtung des Öffnens oder des Schließens der Klemmvorrichtung (1) in Drehung antreiben kann.

10. Vorrichtung (1) nach Anspruch 8, **dadurch gekennzeichnet, dass** das Ende eines Schafts (61) eines Zylinders (6) an dem Zwischenteil (4) derart befestigt ist, dass dieses in Drehung in die Richtung des Öffnens oder des Schließens der Klemmvorrichtung (1) angetrieben werden kann.

## Claims

1. A device (1) for clamping parts intended to be joined, in particular vehicle bodywork parts in a body assembly operation, of the type constituted by a stationary arm (11) and a mobile arm (12) forming a clamp, the two arms (11, 12) being mounted on a hinge bracket (2) mounted on an attachment foot (3), said hinge bracket (2) including two flanges (22) between which the articulation axis (7) of the clamp extends, **characterized in that** the hinge is provided with spring washers (10) permitting automatic wear and play compensation, and the flanges (22) have, in addition, a flexibility such as allows them to contribute to the automatic play compensation of the hinge.

2. The device (1) according to Claim 1, **characterized in that** the hinge is constituted by the axis (7) passing through the two flanges (22) and the end of the mobile arm (12), a friction ring (8) being interposed between said axis (7) and the mobile arm (12) and also a friction washer (9) between the mobile arm (12) and each flange (22).

3. The device according to Claim 2, **characterized in that** the articulation axis (7) has a shoulder (71) at one end coming to rest against a flange (22) and at its opposite end (72) is arranged so as to receive a fixing nut (73), a spring washer (10) being interposed between the shoulder (71) and the flange (22) on one hand and the flange (22) and the nut (73) on the other hand.

4. The device according to one of Claims 1 to 3, **characterized in that** the flanges (22) are made from steel.

5. The device according to one of Claims 1 to 4, **characterized in that** each flange (22) has a theoretical bending of ± 0.2 mm, which leads to a bending with the two flanges (22) of ± 0.4 mm and a total flexibility with the two flanges (22) of 0.8 mm.

6. The device (1) according to one of Claims 1 to 3, **characterized in that** the hinge bracket (2) is constituted by two parts, the one forming a base (21) fixed to the free end of the attachment foot (3) being arranged so as to receive the stationary arm (11) of the clamp, and the other being constituted by the two flanges (22) extending parallel to one another from the base (21), the two arms (11, 12) being mounted for the stationary arm (11) on the base (21) and for the mobile arm (12) on the flanges (22), so as to extend parallel to one another, their ends being opposite one another and provided with clamping elements (5).

7. The device (1) according to Claim 6, **characterized in that** the stationary arm (11) is mounted on the base (21) of the hinge bracket (2), its end being sandwiched between the flanges (22).

8. The device (1) according to one of Claims 1 to 7, **characterized in that** the mobile arm (12) is articulatedly mounted on the two flanges (22) via an intermediate piece (4) having at least two parts, one (4a) being provided with an opening through which the articulation axis (7) is able to be engaged, and the other (4b) having means for the fixing of the mobile arm (12).

9. The device (1) according to Claim 8, **characterized in that** a lever is fixed to the intermediate piece (4) so as to be able to drive the latter in rotation in the opening or closing direction of the clamping device (1) .

10. The device (1) according to Claim 8, **characterized in that** the end of a rod (61) of a jack (6) is fixed to the intermediate piece (4) so as to be able to drive the latter in rotation in the opening or closing direction of the clamping device (1).
